(19) Europäisches Patentamt
European Patent Office
Office européen des brevets

(11) Publication number: **0 002 864**
**B1**

(12) **EUROPEAN PATENT SPECIFICATION**

(45) Date of publication of patent specification: **02.12.81**

(51) Int. Cl.³: **C 08 G 81/02**

(21) Application number: **78200373.5**

(22) Date of filing: **15.12.78**

(54) **A process for preparing linear and/or radial polymers.**

(30) Priority: **29.12.77 GB 5414777**
**25.05.78 GB 5414777**

(43) Date of publication of application:
**11.07.79 Bulletin 79/14**

(45) Publication of the grant of the European patent:
**02.12.81 Bulletin 81/48**

(84) Designated Contracting States:
**BE DE FR IT NL SE**

(56) References cited:
**GB - A - 1 258 581**
**US - A - 3 880 954**

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Verkouw, Hendrik Tijmen**
**Badhuisweg 3**
**NL-1031 CM Amsterdam (NL)**

(74) Representative: **Keuzenkamp, Abraham et al,**
**P.O. Box 302**
**NL-2501 CH Den Haag (NL)**

**EP 0 002 864 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A process for preparing linear and/or radial polymers

The invention relates to a process for preparing linear and/or radial polymers, in particular elastomeric polymers.

It is well known to prepare polymers, e.g. homopolymers, copolymers and terpolymers, by anionic solution polymerization processes. Such processes comprise polymerizing a monoalkenyl aromatic compound, e.g. styrene, and/or a conjugated diene, e.g. butadiene and/or isoprene, in solution using solvents such as hydrocarbons, e.g. cyclohexane, in the presence of a monoalkali-metal compound, e.g. secondary-butyl lithium, to form an alkali-metal terminated polymer. The alkali-metal terminated polymer so formed may be described as a "living" polymer since it is capable of further reaction with e.g. further monomer or various modifiers. Examples of modifiers include "coupling agents" which are compounds capable of linking together two or more alkali-metal terminated polymers to form linear or radial polymers. Various types of coupling agents are known having a wide variety of reactive groups such as polyepoxide, polyester, polyalkoxy, polyvinyl, polyhalide, polyaldehyde, polyisocyanate, polyimine, polyketone and polyanhydride compounds e.g. see G.B. 1,258,581 and U.S. 3,281,383; U.S. 3,468,972; U.S. 3,692,874 and U.S. 3,880,954. Such processes are suitable for preparing elastomeric polymers, in particular thermoplastic polymers.

It has been found that a new class of coupling agents which are silicon compounds may be used as coupling agents in an anionic polymerization process.

The new silicon compounds have

(a) at least one optionally substituted hydrocarboxy group i.e. a group of formula —OR, wherein R is an optionally substituted hydrocarbyl group, directly attached to a silicon atom thereof and

(b) at least one further reactive group being an epoxide group.

According to the invention a process for preparing linear and/or radial polymers is provided, which comprises the steps of: (A) polymerizing a monoalkenyl aromatic compound and/or a conjugated diene in solution in the presence of a mono-alkali-metal compound to form an alkali-metal terminated polymer, and (B) reacting the alkali-metal terminated polymer with a silicon compound having at least one optionally substituted hydrocarboxy group directly attached to a silicon atom thereof, characterized in that, the silicon compound additionally comprises at least one further reactive group being an epoxide group.

Preferred monoalkenyl aromatic compounds for use in step (A) are the monovinyl aromatic compounds, suitably those having from 8 to 18 carbon atoms. Examples include styrene, monovinylnaphthalene as well as the alkylated derivatives thereof such as o-, m-, or p-methylstyrene, tertiary-butyl styrene or alpha-methyl styrene, with styrene itself being most preferred. Preferred conjugated dienes for use in step (A) are the $C_4$ to $C_{12}$, in particular $C_4$ to $C_8$, conjugated dienes. Specific examples include butadiene; isoprene; piperylene; 2,3-dimethyl-1,3-butadiene; 3-butyl-1,3-octadiene, 1-phenyl-1,3-hexadiene; and 4-ethyl-1,3-hexadiene, with butadiene and/or isoprene being most preferred.

The monoalkali-metal compound for use in step (A) is suitably an organo monoalkali-metal compound e.g. a monoalkali-metal hydrocarbon. The preferred initiator is a monolithium hydrocarbon. Suitable monolithium hydrocarbons include unsaturated compounds such as allyl lithium or methallyl lithium; aromatic compounds such as phenyl lithium, the tolyl lithiums, the xylyl lithiums or the naphthyl lithiums and in particular the alkyl lithiums such as methyl lithium, ethyl lithium, propyl lithiums, butyl lithiums, pentyl lithiums, hexyl lithiums, 2-ethylhexyl lithiums, or n-hexadecyl lithium. Secondary-butyl lithium is the preferred initiator. The initiator may be added to the polymerization reaction in one or more stages, preferably as a solution in the same solvent as used in the polymerization reaction.

The amount of the initiator used in the step (A) may vary between wide limits and is determined by the type and the desired molecular weight of the alkali-metal terminated polymer. Suitable amounts are from 0.25 to 100 millimoles per 100 g of monomer used in step (A).

The polymerization reaction is carried out in solution. Suitable solvents are inert liquid solvents such as hydrocarbons e.g. aliphatic hydrocarbons such as pentane, hexane, heptane, octane, 2-ethylhexane, nonane, decane, cyclohexane or methylcyclohexane or aromatic hydrocarbons e.g. benzene, toluene, ethylbenzene, the xylenes, diethylbenzenes or propylbenzenes. A randomizer may also be added to the polymerization reaction mixture.

The polymerization temperature in step (A) may vary between wide limits such as from (-)5°C to 150°C, preferably from 20 to 100°C. The polymerization is suitably carried out in an inert atmosphere such as nitrogen and may be carried out under pressure e.g. at a pressure of from 0.5 to 10 bars. The polymerization reaction is continued until substantially all of the monomer has reacted.

The alkali-metal terminated polymer prepared in step A may be a homo-, co- or terpolymer etc. with homo- or copolymers being preferred. The copolymers may be block, random or tapered copolymers with block copolymers being preferred. Preferred polymers are alkali-metal terminated poly(conjugated

diene)polymers i.e. polymers of formula B-M, wherein B is a poly(conjugated diene) block e.g. a poly(butadiene and/or isoprene) block and M is an alkali-metal, and alkali-metal terminated poly(monoalkenyl aromatic compound/conjugated diene) polymers e.g. polymers of formula A-B-M wherein A is a poly-(monoalkenyl aromatic compound) block e.g. a polystyrene block, B is a poly(conjugated diene) block e.g. a poly(butadiene and/or isoprene) block and M is an alkali-metal.

The average molecular weight of the alkali-metal terminated polymer prepared in step (A) may vary between wide limits with average molecular weights of from 1,000 to 400,000 being suitable, and from 10,000 to 200,000 being preferred. Insofar as polymers of formula A-B-M are concerned it is preferred that the weight of block A i.e. the poly(monoalkenyl compound) block is from 15 to 90%w, more preferably from 20 to 50%w of the weight of the polymer.

The alkali-metal terminated polymers prepared in step (A) are then reacted in step (B) with a silicon compound as herein defined. The step (B) reaction conditions may be the same as those used in step (A) i.e. a preferred temperature of from 20 to 100°C and the use of a solvent which is suitably that solvent present in the polymerization reaction mixture.

Preferred silicon compounds are those having two or three, preferably three, —OR groups and one epoxide group. Suitably the epoxide group is a terminal epoxide group. The silicon compound may be a silane or a siloxane with silanes being preferred.

Preferred silicon compounds may be represented by the general formula:—

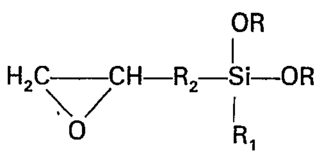

wherein the R groups, which may be the same or different, represent optionally substituted hydrocarbyl groups; $R_1$ represents a H-atom or a R or -OR group; and $R_2$ represents an optionally substituted alkylene group which may be interrupted by one or more heteroatoms such as oxygen or nitrogen atoms.

Suitable R groups are alkyl, cycloalkyl, aryl, alkaryl or aralkyl in particular those groups having from 1 to 20 carbon atoms. Preferred R groups are $C_1$ to $C_{10}$ alkyl groups, in particular methyl groups. Preferably $R_1$ is a -OR group. Suitable the $R_2$ group is a group of formula $-R_3-O-R_4-$ wherein $R_3$ and $R_4$ are optionally substituted alkylene groups. Preferably $R_3$ represents a $C_1$ to $C_3$ alkylene group, more preferably a methylene group, and $R_4$ represents a $C_1$ to $C_{17}$ alkylene group, more preferably a $C_1$ to $C_{10}$ alkylene group, most preferably a propylene group.

Specific examples of suitable silicon compounds include beta-glycidoxyethyl-trimethoxy silane; gamma-glycidoxyl-propyl-trimethoxy silane; gamma-glycidoxypropyl-triethoxy silane; delta-glycidoxybutyl-dimethoxy ethoxy silane; gamma-glycidoxypropyl-triphenoxy silane; gamma-glycidoxypropyl-methyl-dimethoxy silane, and beta-(3,4-epoxycyclohexyl)-ethyltrimethoxy silane.

One advantage of the silicon compounds as herein defined is that they have a high coupling efficiency. Usually more than 90% of the alkali-metal polymers are coupled in the step (B).

The amount of silicon compound added in step (B) may vary between wide limits but is usually at least 0.05 mole per mole of monoalkali-metal compound initiator. Preferred amounts are from 0.1 to 2.0 moles, more preferably from 0.15 to 1.0 moles.

One advantage of the preferred silicon compounds i.e. those containing three -OR groups and one epoxide group is that it is possible, simply by varying the amounts thereof, to couple two or more alkali-metal terminated polymers. Although mixtures of linear and radial polymers are usually formed it is possible for example, by using higher amounts of the silicon compound to favour the formation of linear polymers and by using lower amounts to favour the formation of radial polymers.

After the alkali-metal terminated polymer has been reacted with the silicon compound the system may be inactivated by addition of water, alcohol, acid or other suitable reagent so as to destroy any lithium compound still present. Subsequently the polymer product can be coagulated by addition of an alcohol or other suitable agent and the solid polymer can be separated by any conventional means, such as by filtration. Alternatively, the polymer solution may be flashed and/or steam-treated to remove the solvent.

As will be clear from the above description the preferred linear or radial polymers of the present invention may be represented by the formulae:

$$(B -)_n X \text{ or } (A—B -)_n X$$

wherein A and B are as described above, X is the residue of the silicon compound and n is an integer having an average value of from 2 to 4.

If desired the linear or radial polymers prepared by the process of the present invention may be blended with aromatic or naphthenic processing oils which are usually added to the polymer solution before removal of the solvent. Other ingredients may also be added, such as other polymers, bitumen, anti-oxidants, pigments, fillers, sulphur, curing accelerators and the like. The polymers may be used in any application for which elastomeric or thermoplastic elastomeric polymers are required e.g. foot wear, adhesives, tyres, moulded articles etc.

The invention is illustrated by reference to the following Examples.

Examples 1 to 5

Four lithium-terminated polymers were prepared in a stirred autoclave, under nitrogen, in the following manner.

*(a) Lithium-terminated polymer A:*

A lithium-terminated polystyrene-polybutadiene block copolymer was prepared by first polymerizing a solution of styrene (300 g) in cyclohexane (2700 g). Polymerization was initiated by adding to the solution 95 ml of 200 mmole/litre solution of secondary butyl lithium in cyclohexane. The polymerization was continued for 30 minutes at 40 to 50°C after which substantially all of the styrene had reacted. A solution of butadiene (700 g) in cyclohexane (2300 g) was then added to the polymerization mixture and the polymerization continued for a further 60 minutes at 70°C after which substantially all of the butadiene had reacted.

*(b) Lithium-terminated polymer B:*

A further lithium-terminated polystyrene-polybutadiene block copolymer was prepared as described above using 225 g of styrene and 695 g of butadiene.

*(c) Lithium-terminated polymer C:*

A further lithium-terminated polystyrene-polybutadiene block copolymer was prepared as described above using 325 g of styrene and 745 g of butadiene.

*(d) Lithium-terminated polymer D:*

A lithium-terminated poly-butadiene homopolymer was prepared by polymerizing a solution of butadiene (900 g) in cyclohexane (5000 g). Polymerization was initiated by adding to the solution 85 ml of a 200 mmole/litre solution of secondary butyl lithium in cyclohexane. The polymerization was continued for 75 minutes at 70°C after which substantially all of the butadiene had reacted.

Samples of the above polymer solutions were steam-stripped, after the addition of a sterically hindered phenolic anti-oxidant (0.2 phr), and the molecular weights of the dry polymers determined (apparent GPC peak molecular weights on polystyrene scale). The results are given in Table 1.

The remaining solutions of the above polymers were then reacted with gamma-glycidoxypropyl-trimethoxysilane (GPTS; Examples 1 to 5) in cyclohexane solution (250 mmole per litre) for 30 minutes at 65°C. For comparative purposes polymers B and C were reacted under the same conditions, with methyltrimethoxysilane (MTS; Examples $C_1$ and $C_2$), a known coupling agent.

The "coupled" polymer solutions so prepared were steam-stripped, after the addition of a sterically hindered phenolic anti-oxidant (0.2phr), and the coupling efficiency (i.e. the amount of coupled polymers prepared) determined. The molecular weights of the dry polymers were determined (as described above) and the apparent degree of branching of the polymers calculated (i.e. the molecular weight of the coupled polymer divided by the molecular weight of the lithium-terminated polymer). The results are given in Table 1.

TABLE 1

| Example | GPTS or MTS sec. butyl-lithium (molar ratio) | Coupling Efficiency (%) | Molecular weights: Lithium terminated polymer type | MW($10^3$) | "Coupled" polymer MW($10^3$) | Apparent degree of branching |
|---|---|---|---|---|---|---|
| 1 | 0.5 | 94 | A | 80 | 170 | 2.1 |
| 2 | 0.4 | 93 | B | 68 | 160 | 2.4 |
| 3 | 0.33 | 90 | B | 68 | 190 | 2.8 |
| 4 | 0.25 | 90 | C | 85 | 260 | 3.1 |
| 5 | 0.29 | 91 | D | 96 | 285 | 3.0 |
| $C_1$ | 0.5 | 92 | B | 68 | 135 | 2.0 |
| $C_2$ | 0.33 | 80 | C | 85 | 170 | 2.0 |

## Claims

1. A process for preparing linear and/or radial polymers comprising the steps of (A) polymerizing a monoalkenyl aromatic compound and/or a conjugated diene in solution in the presence of a monoalkali-metal compound to form an alkali-metal terminated polymer, and (B) reacting the alkali-metal terminated polymer with a silicon compound having at least one optionally substituted hydrocarboxy group directly attached to a silicon atom thereof, characterized in that the silicon compound additionally comprises at least one further reactive group being an epoxide group.

2. A process as claimed in claim 1, characterized in that the silicon compound has the general formula:

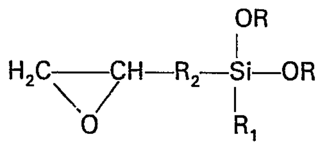

wherein the R groups, which may be the same or different, represent optionally substituted hydrocarbyl groups, $R_1$ represents a H-atom or a R or -OR group, and $R_2$ represents an optionally substituted alkylene group which may be interrupted by one or more oxygen atoms.

3. A process as claimed in claim 2, characterized in that the R groups are $C_1$ to $C_{10}$ alkyl groups.

4. A process as claimed in claim 2 or claim 3, characterized in that $R_2$ represents a group of formula:

$$—R_3—O—R_4—$$

wherein $R_3$ and $R_4$ are optionally substituted alkylene groups.

5. A process as claimed in any one of claims 1 to 4, characterized in that the silicon compound is gamma-glycidoxypropyltrimethoxysilane.

## Revendications

1. Procédé pour la préparation de polymères linéaires et/ou radiaux, comprenant les étapes selon lesquelles (A) on polymérise un composé monoalcényl-aromatique et/ou un diène conjugué en solution en présence d'un composé contenant un seul atome de métal alcalin de manière à former un polymère terminé par un métal alcalin et (B) on fait réagir le polymère terminé par un métal alcalin avec un composé du silicium ayant au moins un groupe hydrocarboxy éventuellement substitué lié directement à un atome de silicium du composé, caractérisé en ce que le composé du silicium comprend en outre au moins un autre groupe réactif qui est un groupe époxyde.

2. Procédé selon la revendication 1, caractérisé en ce que le composé du silicium a la formule générale:

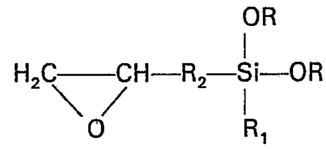

dans laquelle les groupes R, qui peuvent être identiques ou différents, représentent des groupes hydrocarbyle éventuellement substitués, $R_1$ représente un atome d'hydrogène ou un groupe R ou —OR et $R_2$ représente un groupe alcoylène éventuellement substitué qui peut être interrompu par un ou plusieurs atomes d'oxygène.

3. Procédé selon la revendication 2, caractérisé en ce que les groupes R sont des groupes alcoyle de $C_1$ à $C_{10}$.

4. Procédé selon l'une des revendications 2 et 3, caractérisé en ce que $R_2$ représente un groupe de formule:

$$—R_3—O—R_4—$$

dans laquelle $R_3$ et $R_4$ sont des groupes alcoylène éventuellement substitués.

5. Procédé selon l'une des revendications 1 à 4, caractérisé en ce que le composé du silicium est du gamma-glycidoxypropyl-triméthoxysilane.

## Patentansprüche

1. Verfahren zur Herstellung linearer und/oder radialer Polymere umfassend (A) Polymerisation einer aromatischen Monoalkenyl-Verbindung und/oder eines konjugierten Diens in Lösung in Gegenwart einer Monoalkali-Verbindung unter Bildung eines alkaliterminierten Polymers und (B) Umsetzen des alkali-terminierten Polymers mit einer Silicium-Verbindung mit mindestens einer, gegebenenfalls substituierten Kohlenwasserstoffoxy-Gruppe, die direkt an ein Siliciumatom gebunden ist, dadurch gekennzeichnet, dass die Silicium-Verbindung zusätzlich mindestens eine weitere reaktionsfähige Gruppe, die eine Epoxid-Gruppe ist, enthält.

2. Verfahren nach Anspruch 1, dadurch gekennzeichnet, dass die Silicium-Verbindung die allgemeine Formel:

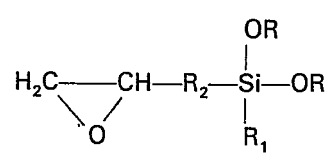

besitzt, wobei die Gruppen R, die gleich oder verschieden sein können, gegebenenfalls substituierte Kohlenwasserstoffgruppen bedeuten, $R_1$ ein H-Atom oder eine Gruppe R oder —OR bedeutet und $R_2$ eine gegebenenfalls

substituierte Alkylengruppe bedeutet, die durch ein oder mehrere Sauerstoffatome unterbrochen sein kann.

3. Verfahren nach Anspruch 2, dadurch gekennzeichnet, dass die Gruppen R $C_1$- bis $C_{10}$-Alkylgruppen sind.

4. Verfahren nach Anspruch 2 oder 3, dadurch gekennzeichnet, dass $R_2$ eine Gruppe der Formel:

$$—R_3—O—R_4—$$

bedeutet, wobei $R_3$ und $R_4$ gegebenenfalls substituierte Alkylengruppen sind.

5. Verfahren nach einem der Ansprüche 1 bis 4, dadurch gekennzeichnet, dass die Siliciumverbindung $\gamma$-Glycidoxypropyltrimethoxysilan ist.